# EUROPEAN PATENT APPLICATION

(11) **EP 4 576 083 A1**
(43) Date of publication of application: **25.06.2025**
(21) Application number: 23219459.7
(22) Date of filing: 21.12.2023
(51) Int. Cl.: G11B 27/00, G11B 27/10, G11B 27/36

(54) **METHOD OF AUDIO PLAYBACK, AND APPARATUS THEREFOR**

(71) Applicant: Harman International Industries, Incorporated, Stamford, CT 06901 (US)
(72) Inventor: CABALLERO, Manuel Dominic, Awbridge, SO51 0HN (GB)
(74) Representative: Rummler, Felix

(57) **Abstract**

The present disclosure relates to a method of audio playback, and in particular to a method of mitigating audible artefacts in audio playback from analogue audio medium. The method comprises: receiving an analogue audio signal including audio data from an analogue audio medium; obtaining a digital reference signal associated with the analogue audio medium; outputting said analogue audio signal; and intermittently switching from outputting said analogue audio signal to outputting said digital reference signal based on a signal quality of said analogue audio signal. Further provided is an apparatus for carrying out said method.

## Description

### Field

The present disclosure relates to a method of audio playback and apparatus therefor, and in particular to a method of mitigating audible artefacts in audio playback from analogue audio medium, and an associated apparatus.

### Background

When looking to play audio from analogue audio mediums, it may be preferred to play back audio directly from the analogue audio medium, such as a vinyl record, to maintain the audio characteristics and quality associated with said analogue audio mediums. However, analogue audio mediums are susceptible to physical damage, which may affect the quality of audio playback. For example, vinyl records may be scratched, which can in turn cause audible artefacts in the playback, preventing the audio played from the vinyl record from sounding as intended. In cases where the record cannot be replaced, the audio from the record can no longer be reproduced, and the intended audio can no longer be recovered.

Digital audio files may be reproduced, thereby avoiding such problems. However, the characteristics and audio quality of digital signals may differ from the analogue playback, and so may not be preferred. There is therefore a need to allow for a high audio fidelity, while maintaining the analogue characteristics of the audio.

### Summary

The present disclosure provides a method of audio playback, the method comprising: receiving an analogue audio signal including audio data from an analogue audio medium; obtaining a digital reference signal associated with the analogue audio medium; outputting said analogue audio signal; and intermittently switching from outputting said analogue audio signal to outputting said digital reference signal based on a signal quality of said analogue audio signal.

The method may be referred to as `restored replay mode' that includes outputting audio from an analogue audio medium, e.g., a record, and temporarily switching to a prerecorded digital version of the audio when the quality of the audio from the analogue audio source is below a certain threshold. This may be the case if the analogue audio source (record) is damaged. Accordingly, the method allows audible artefacts to be mitigated when playing back analogue audio.

In some embodiments, the method further comprises: playing the analogue audio medium to generate a first analogue signal and processing the first analogue signal to obtain said digital reference signal; or playing an equivalent analogue audio medium to generate a first analogue signal and processing the first analogue signal to obtain said digital reference signal. In such embodiments, a digital reference signal can be obtained from the analogue medium before physical damage occurs, such that the playback can be switched to the digital reference signal based on the quality of the analogue audio signal, and the outputted audio signal can be equivalent to that of the undamaged analogue medium. Accordingly, the present embodiments may represent a 'reference playback mode' in which the analogue audio medium, or an equivalent analogue medium to the analogue medium intended to be played back, is played to provide an analogue input signal (the "first analogue signal") to a digital signal processor, DSP, which generates the digital reference signal. Preferably, this is done when the analogue audio medium is still new or undamaged.

In some embodiments, the method further comprises: playing the analogue audio medium to generate a second analogue signal; processing the second analogue signal to obtain a digital audio signal; comparing the digital audio signal with said digital reference signal; and determining the signal quality of said analogue audio signal based on the comparison. In such embodiments, the signal quality of the analogue audio signal can be compared to the digital reference signal, and audible artefacts in the analogue audio signal can be ascertained. The present embodiments may represent a 'recovery mode' in which the analogue audio medium is played and the resulting analogue output signal (the "second analogue signal") is digitised and compared with the digital reference signal.

In some embodiments, the method further comprises: generating, based on the comparison, time data indicating at which time the signal quality of the digital signal associated with the second analogue signal is below a predetermined threshold; preferably wherein the time data comprises one or more timecodes indicating at which time the digital signal associated with the second analogue signal deviates from the digital reference signal by more than a predetermined threshold and the duration of said deviations and said durations. In such embodiments, the analogue signal can be compared to the digital reference signal to generate up-to-date time data of any audible artefacts or periods of insufficient audio quality, such that audible artefacts can be optimally mitigated during playback.

In such embodiments, preferably, the method further comprises: switching from outputting said analogue audio signal to outputting said digital reference signal when the digital audio signal deviates from said digital reference signal by more than a predetermined threshold. In those embodiments, the playback can switch to a digital reference signal during audible artefacts, while an analogue playback can be maintained throughout the rest of the playback.

In some embodiments, the method further comprises: obtaining time data associated with the digital reference signal; and intermittently switching from outputting said analogue audio signal to outputting said digital reference signal based on the associated time data, wherein the time data indicates at which time the signal quality is below a predetermined threshold. In such embodiments, time data indicating audible artefacts, or periods at which the analogue signal quality is insufficient, can be obtained.

In such embodiments, preferably, the time data comprises one or more timecodes indicating at which time a digital audio signal associated with the analogue audio medium deviates from said digital reference signal by more than a predetermined threshold and the duration of said deviations, the method further comprising: storing the timecodes and durations as the time data. In such embodiments, preferably, switching from outputting said analogue audio signal to outputting said digital reference signal comprises: at each of the one or more timecodes, switching a playback patch such that an emission of the analogue audio signal ceases and an emission of the associated digital reference signal begins; emitting the associated digital reference signal for the duration associated with the respective timecode; switching the playback patch upon the end of the duration associated with the respective timecodes such that emission of the associated digital reference signal ceases and emission of the analogue audio signal continues. In those embodiments, the need for manual switching between audio signals can be avoided.

In some embodiments, the method comprises: playing an analogue audio medium; determining that there is a stored digital reference signal associated with the played analogue audio medium; determining that there is stored time data associated with the played analogue audio medium; and retrieving the stored digital reference signal and time data associated with the re-played analogue audio medium. In such embodiments, if it is determined that a digital reference signal and time data associated with the played analogue audio medium is available, the digital reference signal and the time are retrieved. Where it is determined a digital reference signal and associated time data is stored, the need to create or download such data can be avoided, and the optimised playback can begin.

In such embodiments, preferably, determining that there is a stored digital reference signal associated with the played analogue audio medium comprises: digitising an analogue signal corresponding to the re-played analogue audio medium; performing audio recognition on the digitised analogue audio signal; and identifying the associated digital reference signal based on the audio recognition. In such embodiments, the analogue audio medium can be analysed to determine the existence of a stored digital reference signal.

In some embodiments, preferably, said analogue audio medium is a vinyl record. In such embodiments, the vinyl record can be played back with an analogue playback for as long as possible, while audible artefacts, such as those caused by damage to the vinyl record, can be mitigated.

The present disclosure further provides apparatus for use in audio playback, wherein the apparatus is configured to carry out the method of any of the preceding embodiments.

In some embodiments, the apparatus further comprises: an analogue to digital converter, ADC for generating said digital reference signal; a processor for generating said time data; a memory unit for storing said digital reference signal and said time data; and a controller for intermittently switching between an analogue audio playback to a digital audio playback. In such embodiments, audible artefacts can be mitigated, and the audio playback quality can be improved.

In some embodiments, the apparatus is configured to receive an audio signal from a vinyl record player. In such embodiments, the vinyl record can be played back with an analogue playback for as long as possible, while audible artefacts, such as those caused by damage to the vinyl record, can be mitigated.

In such embodiments, preferably, the apparatus is integrated in a vinyl record player. The complexity of use can therefore be reduced, and compatibility between the vinyl record player and the apparatus can be ensured.

### Brief Description of Drawings

Figure 1 illustrates an embodiment of the disclosure in restored playback mode;
Figure 2 illustrates an embodiment of the disclosure in reference playback mode;
Figure 3 illustrates an embodiment of the disclosure in recovery mode;
Figure 4 illustrates a method of the disclosure in restored playback mode;
Figure 5 illustrates a method of the disclosure in reference playback mode;
Figure 6 illustrates a method of the disclosure in recovery mode; and
Figure 7 illustrates a method of the disclosure in restored playback mode.

Embodiments illustrated in the figures are intended to improve clarity, and are intended to be exemplary.

### Detailed Description

While various aspects of the present disclosure are described with reference to a vinyl record as an analogue audio medium, the skilled person will understand that any analogue audio medium can be equivalently substituted unless otherwise explicitly stated, and the present disclosure is not limited to such embodiments. The present disclosure is not intended to be limited to such embodiments, and additional modifications, applications, and embodiments may be implemented without departing from the present disclosure. In the figures, like reference numerals have been used to illustrate the same or corresponding components. Those skilled in the art can recognise that the various components described may be altered without departing from the scope of the present disclosure.

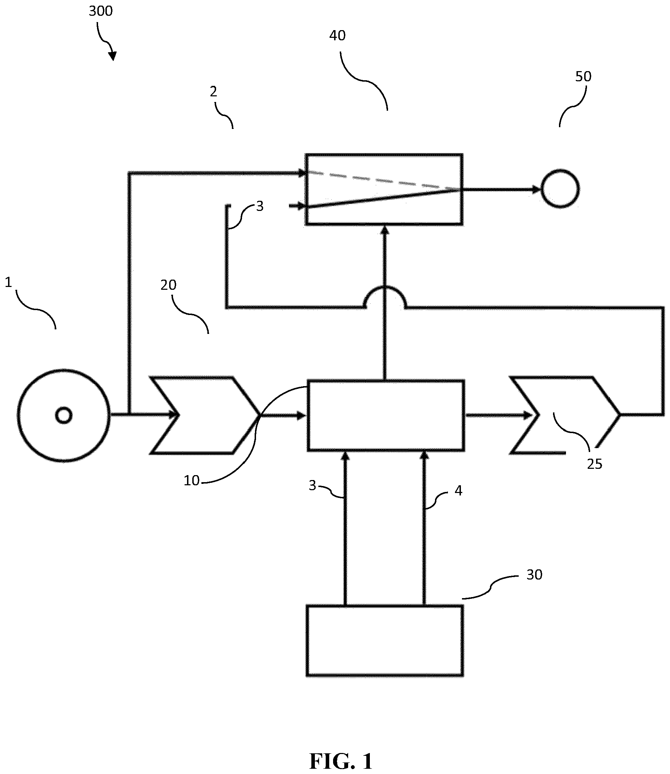

The detailed description is directed to a method and apparatus for mitigating audible artefacts in analogue playback. Fig. 1 illustrates an embodiment of the disclosure `restored playback mode'. The embodiment of Fig. 1 comprises an analogue audio medium 1, an analogue-to-digital converter (ADC) 20, a digital signal processor (DSP) 10, a memory unit 30, a digital-to-analogue converter (DAC) 25, and a playback patch 40, also referred to as an analogue switch. It can be understood that while the present disclosure refers to an ADC or a DAC, other components capable of converting analogue or digital signals may be used. It can also be understood that while the present disclosure refers to the memory unit 30 being a flash memory, other means for storing a digital reference signal 3 or time data 4 may be used.

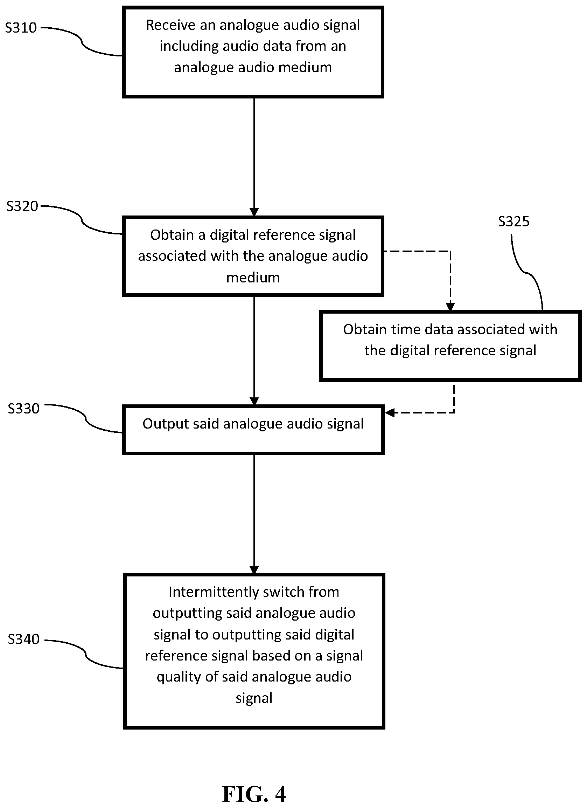

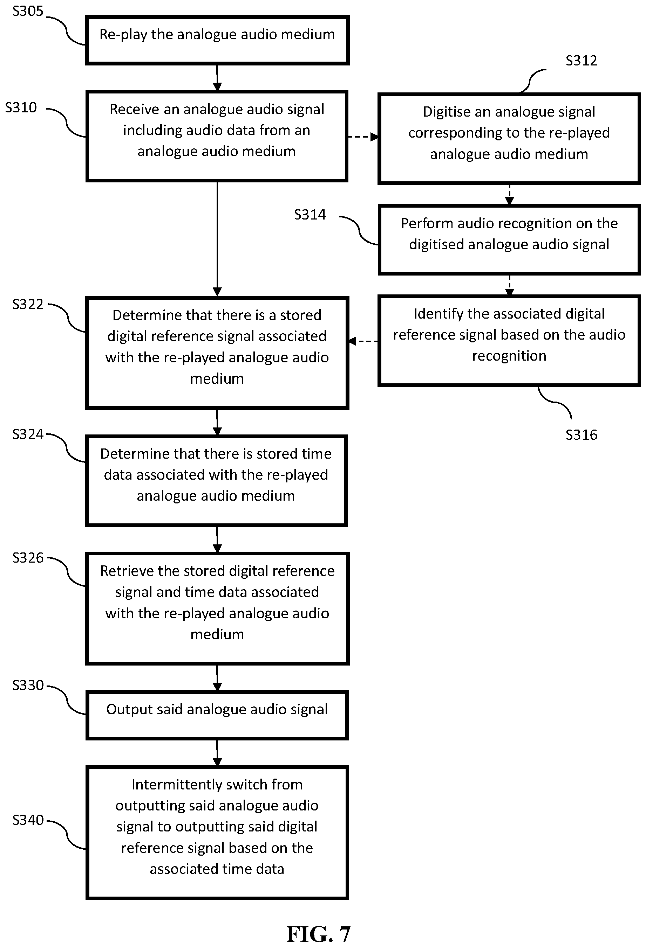

Figs. 4 and 7 illustrate embodiments of methods of the `restored playback mode'. In `restored playback mode', the DSP 10 receives an audio signal from the analogue audio medium 1 via the ADC 20, which digitises the analogue audio signal. In the present embodiment, the analogue audio medium is a vinyl record. In other embodiments, alternative analogue audio mediums may be used. In the embodiment shown in Fig. 7, the DSP 10 then performs audio recognition on the digitised analogue audio signal. Based on the results of the audio recognition, the DSP 10 can identify the associated digital reference signal 3. In other embodiments, the digital reference signal 3 can be manually identified by an operator.

The DSP 10 obtains the associated digital reference signal 3 representative of the audio signal. In the embodiments of Figs. 1 and 7, the digital reference signal 3 is stored locally in a flash memory 30, the DSP 10 determines that the digital reference signal 3 is stored, and the DSP 10 retrieves the digital reference signal 3 from the flash memory 30. In other embodiments, the digital reference signal 3 may be stored in a cloud, and the DSP 10 may retrieve the digital reference signal 3 from the cloud.

In the embodiments of Figs. 1, 4, and 7, the DSP 10 may obtain time data associated with the analogue audio medium. This is an optional step of the method shown in Fig. 4. In the embodiments shown in Figs. 1 and 7, the DSP 10 further determines that there is stored time data associated with the analogue audio medium, and retrieves the time data associated with the re-played analogue audio medium. The time data of the present embodiments comprises timecodes at which the signal quality is below the predetermined threshold, and the duration for which it is below the threshold. In some embodiments, the signal quality, and thus the time data is based on the digitised analogue audio signal deviating from the digital reference signal 3 by more than a predetermined threshold. In the embodiments illustrated in Figs. 1 and 7, the time data is stored locally on flash memory 30, and the DSP 10 retrieves the time data from the flash memory 30. However, in other embodiments, the time data may be stored on a cloud, and the DSP 10 may retrieve the time data from the cloud.

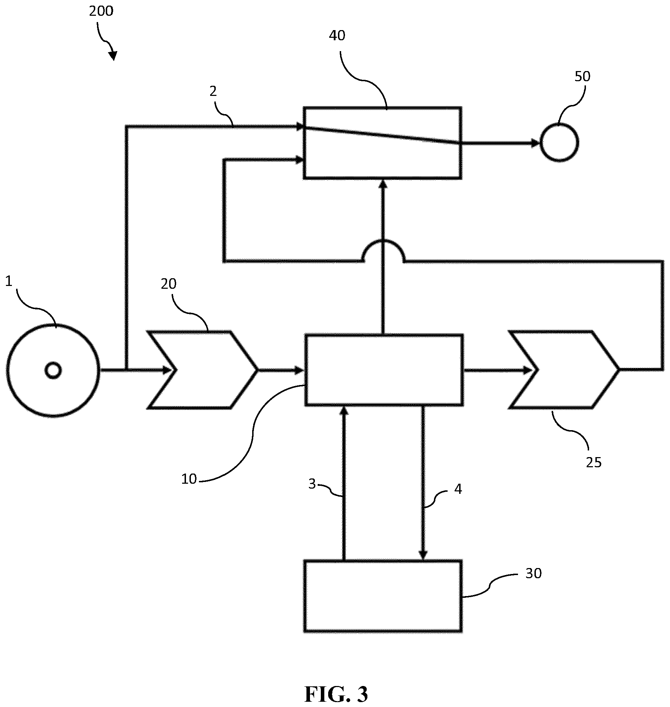

In the embodiments shown in Figs. 1, 4 and 7, the analogue audio signal is output via the playback patch 40. The DSP 10 switches the playback patch 40 from outputting the analogue audio signal to outputting said digital reference signal 3 based on a signal quality of said analogue audio signal. In the embodiment of Figs. 1 and 7, the DSP obtains time data associated with the analogue audio signal that indicates at which time the signal quality is below a predetermined threshold by retrieving it from the memory unit 30. As discussed in more detail with reference to Fig. 3, the predetermined threshold may be based on a deviation of the analogue signal from the digital reference signal.

In the embodiment illustrated in Fig. 1, the playback patch 40 is illustrated as a switch, wherein when the analogue audio signal quality is at an acceptable quality, the playback patch 40 is connected to the analogue audio signal, while when the signal quality is below a predetermined threshold, the playback patch 40 is connected to the DSP 10 via a DAC 25, and receives the digital reference signal 3 from the DSP 10.

When the time data indicates that the analogue audio signal quality has returned to an acceptable quality, the DSP 10 switches the playback patch 40 from outputting the digital reference signal 3 to outputting the analogue audio signal. In some embodiments, once a deviation has been detected, or once a time code has been determined, control elements such as a dead-band of values around the threshold, minimum durations recorded for the deviations, or a minimum intervals between deviations may be used to prevent oscillations in the audio signal outputted from output 50 of the playback patch 40. In such embodiments, during section of audio that is affected by damage, even if which the digitised analogue audio signal oscillates and therefore includes brief peaks above the threshold, it may be still recorded as a single deviation. In such embodiments, the quality of audio played back in the `restored playback mode' may be improved, the resources required in `restored playback mode' may be reduced, and the storage requirements for storing the time data can be reduced.

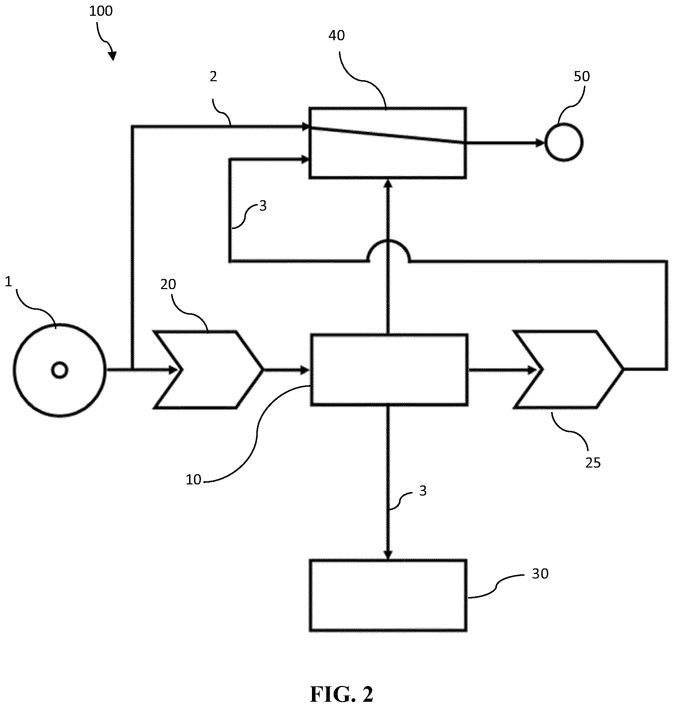

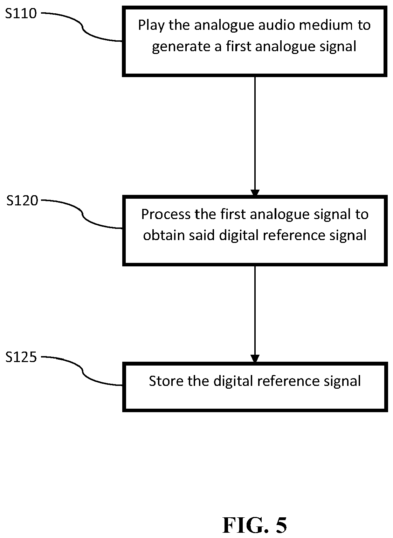

Illustrated in Fig. 2 is an embodiment of the present disclosure in 'reference playback mode'. Fig. 5 illustrates an embodiment of a method of the 'reference playback mode'. The operator may play the vinyl record 1 to generate a first analogue signal, such that the DSP 10 can process the first analogue signal to obtain the digital reference signal 3. Preferably, the analogue audio medium 1 is undamaged or minimally damage, such as may be the case shortly after the analogue audio medium has been produced or acquired. In such embodiments, the digital reference signal 3 generated is representative of the originally intended analogue audio, without audible artefacts or having reduced audible artefacts. In the embodiment of Fig. 2, the DSP 10 can further store the digital reference signal 3 in a local flash memory 30. In other embodiments, the digital reference signal may be stored on a cloud. In still other embodiments, the digital reference signal 3 may be generated from a different analogue audio medium than the analogue audio medium used for the `restored playback mode' or the 'recovery mode'. In such embodiments, the digital reference signal 3 may have been provided by the producer of the analogue audio medium 1, or may have been generated by an equivalent analogue audio medium. In cases where it has not been possible to generate a digital reference signal using the analogue audio medium before it has been damaged, it may be preferred to obtain a digital reference signal generated from an equivalent analogue audio medium to best mitigate the audible artefacts.

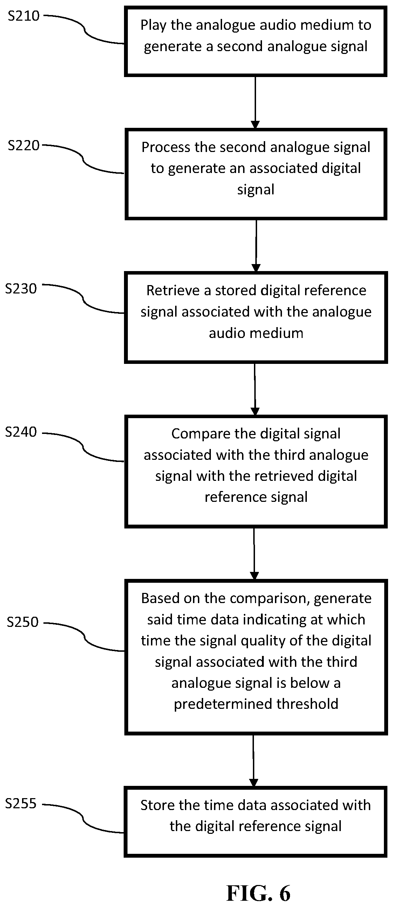

Fig. 3 illustrates an embodiment of the present disclosure in 'recovery mode'. Fig. 6 illustrates an embodiment of a method of the 'recovery mode'. In recovery mode, the DSP 10 may receive a second analogue signal from the analogue audio medium. In the present embodiment, the analogue audio medium is the same analogue audio medium used to generate the digital reference signal. In the present embodiment, 'recovery mode' may be temporally separated from 'reference playback mode', or may be used after damage to the analogue audio medium is detected or suspected. The operator may carry out a method of 'recovery mode', whenever a change in the physical state of the analogue audio medium that may cause the analogue audio signal to change is detected or suspected, such that audible artefacts can be mitigated, and the quality of the audio playback can be improved. However, in other embodiments, the digital reference signal 3 may be generated using a different analogue audio medium, such as an analogue audio medium intended to produce an equivalent analogue audio signal. In the present embodiment, the ADC 20 processes the second analogue signal to obtain a digital audio signal. In other embodiments, other components may be used to obtain the digital audio signal. The DSP 10 uses the digital audio signal to obtain the digital reference signal. In some embodiments, the DSP 10 performs audio recognition on the digital audio signal, identifies the associated digital reference signal 3 and retrieves the associated digital reference signal 3. In other embodiments, the associated digital reference signal 3 may be identified in other ways, such as being manually identified by the operator. The DSP 10 compares the digital audio signal with the associated digital reference signal, and determines the signal quality of said analogue audio signal based on the comparison.

In the embodiment illustrated in Figs. 3 and 6, the DSP 10 determines one or more time codes at which the digital audio signal deviates from the associated digital reference signal 3 by greater than a predetermined threshold. The DSP 10 further determines the duration for which the digital audio signal deviates from the associated digital reference signal 3 at each of the one or more time codes. In some embodiments, the predetermined threshold is a single threshold employed throughout duration of the digital reference signal 3. In other embodiments, the predetermined threshold may vary throughout the duration of the digital reference signal 3. The DSP 10 then generates the time data indicating at which time the signal quality of the digital signal associated with the second analogue signal is below a predetermined threshold, and in particular generating said timecodes indicating at which time the digital signal associated with the second analogue signal deviates from the retrieved digital reference signal by more than a predetermined threshold and the duration of said deviations. In the method shown in Figs. 3 and 6, the generated time data may then be stored in the memory unit 30. Once the time data has been generated, the operator may use the time data in `restored playback mode' as shown in Fig. 4 or Fig. 7 and discussed above.

In a second aspect, the present disclosure provides an apparatus for audio playback. The apparatus may include the analogue to digital converter (ADC) 20 for generating said digital reference signal 3; a processor for generating said time data; a memory unit 30 for storing said digital reference signal 3 and said time data; and a controller for intermittently switching between an analogue audio playback to a digital audio playback. In the embodiments of Figs. 1-3, the memory unit 30 is flash memory, however other types of memory may be used. In the embodiments of Figs. 1-3, DSP 10 comprises the processor and the controller. In said embodiments, the processor and the controller are integrated. However, in other embodiments, the components may not be integrated. In some embodiments, the ADC 20 may be an ADC/DAC combined unit.

In some embodiments, the apparatus is configured to receive an audio signal from a vinyl record player. In some embodiments, the apparatus may be connectable to a vinyl record player, such as a pre-existing vinyl record player. In other embodiments, the apparatus is integrated in a vinyl record player.

According to embodiments of the present disclosure, it is also envisaged that that the manufacturer of the vinyl record provides a digital copy of the audio signal of the vinyl record, i.e., the digital reference signal, for the purposes mitigating any audible artefacts when playing back the vinyl record. The digital copy could be provided for download by a customer. In particular, the digital copy could be made available for download by providing a QR code on the sleeve of the vinyl record, which the customer can scan to activate the download.

Accordingly, a method in accordance with embodiments of the present disclosure may include any of the following steps:
- A customer purchases a vinyl record.
- The customer scans a QR code on the sleeve of the vinyl record.
- This causes a digital copy (also "digital master") of the record to be downloaded to the record player / turntable. The digital copy may be based on the master recording used to press the record.
- During an `analysis' playback, the apparatus compares the record to the downloaded digital master and determines timestamps when defects are identified
- During subsequent 'normal' playback, the turntable substitutes digital segments to mask the damaged record playback. As it has the timestamps from the analysis and a full digital copy of the master recording, it can do this with no user intervention.
- As a record becomes increasingly damaged over time, the user can repeat the `analysis' playback to update the corrected segments.
- As the turntable knows how many substitutions it is making, it can advise the user how damaged/wom the record is.
- This additional service can be a revenue source for the record company as well as the equipment (record player) manufacturer.

An embodiment of the present disclosure relates to a concept of an analysis of a playback, wherein a player plays a record, makes a digital conversion as it is playing the record and compares it to an internally stored digital version of the record. An embedded DSP identifies any discrepancies (e.g., due to damage to the record) and makes a note of the timestamp (position) of the defect. No correction takes place during the analysis playback so the user would still hear the defects.

During subsequent playbacks, the DSP tracks the playback and when a defect timestamp is reached (or just before), it switches the native analogue playback to the segment of digital recording stored in an internal memory. The duration of the substitution typically is short (e.g., a few milliseconds) but it corresponds to the length of time determined to be defective during the analysis playback. After the substitution is complete, the player switches back to native analogue playback of the record.

By substituting the segments thus, the user can enjoy near-perfect vinyl record playback even when there is light to moderate damage to the record. The playback is still a "pure analogue" playback except for short corrected segments. Thus, a system according to embodiments of the present disclosure still provides a true vinyl record playback experience, not a digitised version of it.

The user can repeat the analysis playback to update the discrepancy list if the record sustains new damage.

### Reference Numerals

- Analogue audio medium 1;
- Analogue-to-digital converter (ADC) 20;
- Digital signal processor (DSP) 10;
- Memory unit 30;
- Digital-to-analogue converter (DAC) 25;
- Playback patch 40;
- Output 50;
- Analogue audio signal 2;
- Digital reference signal 3;
- Time data 4;
- Arrangement of an embodiment of the present disclosure in `restored playback mode' 300;
- Arrangement of an embodiment of the present disclosure in 'reference playback mode' 100; and
- Arrangement of an embodiment of the present disclosure in 'recovery mode' 200.

## Claims

1. A method of audio playback, the method comprising:
receiving an analogue audio signal including audio data from an analogue audio medium;
obtaining a digital reference signal associated with the analogue audio medium;
outputting said analogue audio signal; and
intermittently switching from outputting said analogue audio signal to outputting said digital reference signal based on a signal quality of said analogue audio signal.

2. The method of claim 1, further comprising:
playing the analogue audio medium to generate a first analogue signal; and
processing the first analogue signal to obtain said digital reference signal;
or, further comprising:
playing an equivalent analogue audio medium to generate a first analogue signal; and
processing the first analogue signal to obtain said digital reference signal.

3. The method of claim 1 or 2, further comprising:
playing the analogue audio medium to generate a second analogue signal;
processing the second analogue signal to obtain a digital audio signal;
retrieving the digital reference signal associated with the analogue audio medium;
comparing the digital audio signal with said digital reference signal; and
determining the signal quality of said analogue audio signal based on the comparison.

4. The method of claim 3, further comprising:
generating, based on the comparison, time data indicating at which time the signal quality of the digital signal associated with the second analogue signal is below a predetermined threshold;
preferably wherein the time data comprises one or more timecodes indicating at which time the digital signal associated with the second analogue signal deviates from the digital reference signal by more than a predetermined threshold and the duration of said deviations and said durations.

5. The method of any preceding claim, further comprising:
switching from outputting said analogue audio signal to outputting said digital reference signal when the digital audio signal deviates from said digital reference signal by more than a predetermined threshold.

6. The method of any preceding claim, further comprising:
obtaining time data associated with the digital reference signal;
intermittently switching from outputting said analogue audio signal to outputting said digital reference signal based on the associated time data, wherein the time data indicates at which time the signal quality is below a predetermined threshold.

7. The method of claims 4 or 6, wherein the time data comprises one or more timecodes indicating at which time the digital audio signal deviates from said digital reference signal by more than a predetermined threshold and the duration of said deviations, the method further comprising:
storing the timecodes and durations as the time data.

8. The method of claim 7, wherein switching from outputting said analogue audio signal to outputting said digital reference signal comprises:
at each of the one or more timecodes, switching a playback patch such that an emission of the analogue audio signal ceases and an emission of the associated digital reference signal begins;
emitting the associated digital reference signal for the duration associated with the respective timecode;
switching the playback patch upon the end of the duration associated with the respective timecodes such that emission of the associated digital reference signal ceases and emission of the analogue audio signal continues.

9. The method of any preceding claim, comprising:
playing the analogue audio medium;
determining that there is a stored digital reference signal associated with the re-played analogue audio medium;
determining that there is stored time data associated with the re-played analogue audio medium; and
retrieving the stored digital reference signal and time data associated with the re-played analogue audio medium.

10. The method of any preceding claim, further comprising:
digitising an analogue signal corresponding to the analogue audio medium;
performing audio recognition on the digitised analogue audio signal; and
identifying the associated digital reference signal based on the audio recognition.

11. The method of any preceding claim, wherein said analogue audio medium is a vinyl record.

12. An apparatus for use in audio playback, wherein the apparatus is configured to carry out the method of any preceding claim.

13. The apparatus of claim 12, further comprising:
an analogue to digital converter, ADC for generating said digital reference signal;
a processor for generating said time data;
a memory unit for storing said digital reference signal and said time data; and
a controller for intermittently switching between an analogue audio playback to a digital audio playback as defined in any of claims 1 to 11.

14. The apparatus of claim 12 or 13, wherein the apparatus is configured to receive an audio signal from a vinyl record player.

15. The apparatus of claim 14, wherein the apparatus is integrated in a vinyl record player.
